Europäisches Patentamt

European Patent Office

Office européen des brevets

(11) Veröffentlichungsnummer: **0 259 635**
**B1**

(12) **EUROPÄISCHE PATENTSCHRIFT**

(45) Veröffentlichungstag der Patentschrift:
31.01.90

(51) Int. Cl.⁴: **B23K 31/00**

(21) Anmeldenummer: **87111624.0**

(22) Anmeldetag: **11.08.87**

(54) Verfahren zur Herstellung von thermisch hochbelasteten Kühlelementen.

(30) Priorität: **05.09.86 DE 3630323**

(43) Veröffentlichungstag der Anmeldung:
**16.03.88 Patentblatt 88/11**

(45) Bekanntmachung des Hinweises auf die Patenterteilung:
**31.01.90 Patentblatt 90/5**

(84) Benannte Vertragsstaaten:
**CH FR GB IT LI**

(56) Entgegenhaltungen:
**AT-B- 136 650**
**DE-A- 1 627 541**
**DE-C- 841 988**
**GB-A- 2 103 980**

(73) Patentinhaber: **Kernforschungsanlage Jülich GmbH, Wilhelm-Jonen-Strasse, D-5170 Jülich(DE)**

(72) Erfinder: **Heybutzki, Helmut, Kommstrasse 13, D-5170 Jülich(DE)**
Erfinder: **Krug, Wolfgang, Siemensstrasse 18, D-5170 Jülich(DE)**
Erfinder: **Seferiadis, Johann, Im Wiesengrund 5, D-5170 Jülich(DE)**
Erfinder: **Sigismund, Egon, Kalkbergstrasse 181, D-5100 Aachen(DE)**

(74) Vertreter: **Paul, Dieter-Alfred, Dipl.-Ing., Fichtestrasse 18, D-4040 Neuss 1(DE)**

ACTORUM AG

## Beschreibung

Die Erfindung betrifft ein Verfahren zur Herstellung von thermisch hochbelasteten Kühlelementen, insbesondere von Beschleunigungsgittern für die Neutralteilcheninjektion in Fusionsreaktoren, bei dem in eine Grundplatte offene Kühlkanäle eingeformt, insbesondere eingefräst werden und eine Deckplatte aufgelegt wird, nachdem zwischen beiden schichtweise ein Lot angeordnet worden ist, und bei dem schließlich Grund- und Deckplatte, vorzugsweise unter Druckbelastung, durch Erhitzen miteinander verlötet werden.

Im Bereich der Fusionstechnologie werden thermisch hochbelastete, aktiv gekühlte Strukturen auch in Form von mit einer Vielzahl von Durchgangslöchern versehenen Gitterplatten benötigt. Dies gilt speziell für die Neutralteilcheninjektion in Fusionsreaktoren, bei der hochenergetische Teilchen (H+-Ionen) in einer Ionenquelle erzeugt werden. Diese Teilchen werden zu deren Beschleunigung durch einen Gittersatz geschickt, der aus drei Einzelgittern, nämlich einem Plasmagitter, einem Beschleunigungsgitter und einem Erdgitter, besteht, die in einem bestimmten Abstand parallel zueinander angeordnet und an Gitterträgern befestigt sind. Die Gitter sind quergeteilt mit gegeneinander leicht angewinkelten Gitterhälften und weisen in einem bestimmten Anordnungsmuster Durchgangsbohrungen auf, durch welche die Ionen beschleunigt und auf einen gemeinsamen Fokalpunkt hin fokussiert werden.

Um Verformungen der Gitterplatten durch die thermische Belastung zu vermeiden, sind in ihnen zwischen den Durchgangsbohrungen rechtwinklig dazu verlaufende Kühlkanäle angeordnet, durch die Wasser zur Wärmeabfuhr strömt. Die Gitterplatten werden zur Vermeidung von örtlichen Temperaturerhöhungen aus gut wärmeleitendem Material, insbesondere aus hochreinem Kupfer, hergestellt. Um einerseits die Plattentemperatur im Betriebszustand so niedrig wie möglich und andererseits die Wasseraufheizung gering zu halten, muß eine ausreichende Wassermenge durch die Gitterplatten fließen. Da die Kühlkanäle nur geringe Abmessungen und damit hohe Druckverluste haben, muß das Wasser mit entsprechend hohem Vordruck durch die Gitterplatten gepreßt werden. Entsprechend werden hohe Anforderungen an die Dichtheit und Festigkeit der Kühlkanäle gestellt.

Bisher wurden zumindest in Europa Beschleunigungsgitter fast ausschließlich nach dem sogenannten Galvanoplastik-Verfahren hergestellt. Dieses Verfahren war jedoch teuer und nicht unproblematisch. Als Alternative dazu wurden deshalb Lötverfahren entwickelt. Sie arbeiten alle nach dem Prinzip der Ag-Cu-Eutektikumslötung.

Bei diesem Verfahren werden die Kühlkanäle in eine Seite einer Grundplatte eingefräst und auf diese Seite anschließend eine Deckplatte aufgelegt. Diese Deckplatte ist zuvor galvanisch mit einer definierten Silberschicht versehen worden. Nach Erhitzen der aus Grund- und Deckplatte bestehenden Einheit auf die Ag-Cu-Eutektikumstemperatur und unter Druckbelastung entsteht eine Lötverbindung zwischen der Deckplatte und den zwischen den Kühlkanälen und den Durchgangslöchern verbliebenen Flächen der Grundplatte.

Die auf diese Weise hergestellten Gitterplatten bereiten erhebliche Probleme insbesondere hinsichtlich der Dichtheit der Kühlkanäle. Es konnten bisher keine vollständig funktionsfähigen Gittersätze gefertigt werden.

Der Erfindung liegt deshalb die Aufgabe zugrunde, ein Verfahren zur Herstellung von mit Kühlkanälen versehenen Kühlelementen zu finden, das ein einwandfreies Verlöten von Grund- und Deckplatte mit hoher Dichtigkeit der Kühlkanäle gewährleistet.

Diese Aufgabe wird erfindungsgemäß dadurch gelöst, daß zwischen Grund- und Deckplatte Abstandhalter sowie eine Lötfolie vorgesehen werden, und daß das anschließende Löten mit unten liegender Deckplatte erfolgt, so daß die Abstandshalter den zwischen Grund- und Deckplatte nötigen Abstand beim Löten einhalten.

Durch diese Maßnahmen wird ein einwandfreies Verlaufen des Lotes und vollständiges Benetzen aller zu verlötender Flächen erreicht, ohne daß das Lot in die Kühlkanäle läuft und diese verengt oder sogar blockiert. Durch Verwendung der dünnen Lötfolie bleibt das Lotangebot im wesentlichen auf die zu verlötenden Flächen beschränkt, wobei die Abstandshalter dafür sorgen, daß für die Bildung der Lotverbindung ein definierter Spalt zur Verfügung steht und damit ein Auspressen des Lotes in die Kühlkanäle verhindert wird. Da das Löten mit untenliegender Deckplatte erfolgt, wird verhindert, daß Lot durch Schwerkraft in die Kühlkanäle fließen kann.

In Ausbildung der Erfindung ist vorgeschlagen, daß in der Lötfolie spätestens vor dem Löten mit den Durchgangslöchern deckungsgleiche Löcher ausgespart werden. Auf diese Weise entspricht das Lotangebot noch besser den tatsächlich zu verlötenden Flächen und wird die Gefahr des Eindringens von Lot in die Kühlkanäle noch weiter verringert.

In weiterer Ausbildung der Erfindung ist vorgesehen, daß die Kühlelemente Durchgangslöcher aufweisen und die Durchgangslöcher vor dem Löten nur in die Grundplatte und erst nach dem Löten in die Deckplatte gebohrt werden. Auf diese Weise wird eventuell in die Durchgangslöcher eingedrungenes Lot entfernt.

Zur leichteren Handhabung ist es zweckmäßig, daß die Löcher in der Lötfolie vor dem Auflegen auf einer der Platten ausgespart werden.

Die Abstandhalter bestehen vorzugsweise aus Drähten, Plättchen, Noppen, Ringen oder dergleichen. Sie können zwischen Lötfolie und Grundplatte angeordnet werden, bevor die Einheit verlötet wird. Als Material kommt insbesondere das der Grund- und Deckplatte in Frage. Auf jeden Fall muß es einen höheren Schmelzpunkt haben als das der Lötfolie, damit die Abstandswirkung auch während des Lötens erhalten bleibt. Für den Verwendungszweck als Beschleunigungsgitter ist dann hochreines Kupfer anzustreben, da auch Deck- und Grundplatte aus diesem Material bestehen.

Als günstige Werte für die Dicke der Abstandhalter und der Lötfolie haben sich ca. 0,08 mm bei ersterer und ca. 0,1 mm für letztere erwiesen.

In weiterer Ausgestaltung der Erfindung ist vorgesehen, daß zumindest die in die Grundplatte eingeformten Wandungen der Kühlkanäle vor dem Verlöten mit einer die Benetzung durch das Lot behindernden Beschichtung versehen werden. Diese Beschichtung sollte nach dem Löten durch Beizen oder andere Behandlungsmaßnahmen entfernt werden. Zur Herstellung der Beschichtung kommt insbesondere ein Verfahren in Frage, bei dem die Grundplatte vor dem Auflegen der Lötfolie und der Deckplatte zur Bildung einer Oxidschicht unter Lufteinwirkung aufgeheizt und die Oxidschicht anschließend von den zu verlötenden Flächen entfernt wird, letzteres beispielsweise durch einen Schleifvorgang. Es bleiben dann nur die Oberflächen der Kühlkanäle oxidiert, wobei die Oxidschicht ein Benetzen durch Kapillarwirkung oder Kriechen verhindert.

Für den Fall, daß trotz der vorgenannten Maßnahmen Lot in die Kühlkanäle gelangt und dort zu Verengungen oder sogar Blockaden führt, sieht das erfindungsgemäße Verfahren des weiteren vor, daß das Kühlelement nach dem Löten nochmals auf bzw. über Löttemperatur erhitzt und das in den Kühlkanälen befindliche Lot herausgeblasen wird, und zwar vorzugsweise durch stoßweises Durchblasen mittels eines Inertgases. Eine entsprechende Gewichtsbelastung verhindert, daß die Dichtheit der Lötstellen dadurch beeinträchtigt wird.

Bei hohen Anforderungen, wie z.B. bei Verwendung als Beschleunigungsgitter, ist es notwendig, daß die Lötung im Hochvakuum stattfindet. Dies ist vor allem bei Edelmetalloten erforderlich, beispielsweise bei Verwendung einer Lötfolie aus Silber-Palladium. Dabei sollte hochschmelzendes Material verwendet werden, um erfindungsgemäß eine Reparatur eventueller Lecks mit einem Lot gleicher Art zu ermöglichen, dessen Schmelztemperatur niedriger als das der Lötfolie liegt. Auf diese Weise wird die mittels der Lötfolie bewirkende Lötung bei der Durchführung von Reparaturen nicht aufgeschmolzen.

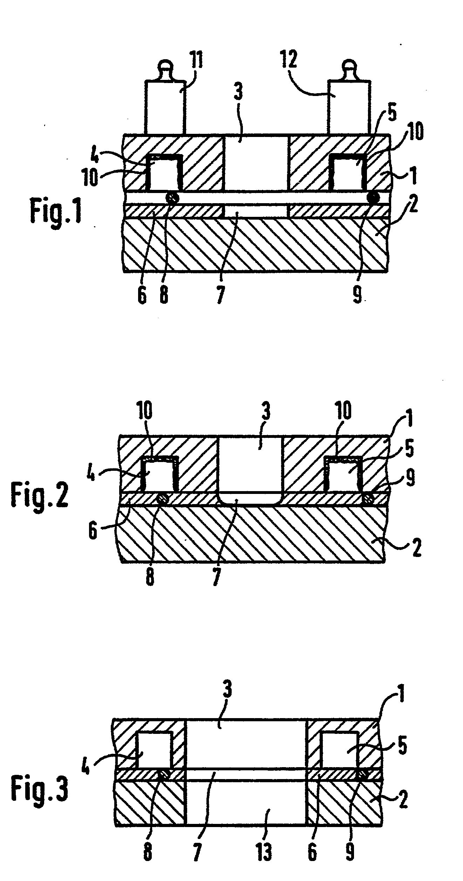

In der Zeichnung ist die Erfindung an Hand eines Ausführungsbeispiels näher veranschaulicht. Es zeigen:

Figur (1) einen Teilquerschnitt durch ein Beschleunigungsgitter vor dem Löten;
Figur (2) den Teilschnitt gemäß Figur (1) nach dem Löten und
Figur (3) den Teilschnitt gemäß den Figuren (1) und (2) nach der Endbearbeitung.

Die in Figur (1) dargestellte Anordnung besteht aus einer Grundplatte (1) und einer darunter befindlichen Deckplatte (2). Grund- und Deckplatte (1, 2) bestehen aus hochreinem Kupfer.

Die Grundplatte durchdringen über ihre sich senkrecht zur Zeichnungsebene erstreckende Fläche verteilt eine Vielzahl von Durchgangslöcher (3), von denen hier nur eins zu sehen ist. Zu beiden Seiten der Durchgangslöcher (3) verlaufen im Querschnitt rechteckige Kühlkanäle (4, 5), die in die Grundplatte (1) eingefräst sind. Nach links und rechts anschließend sind weitere, hier nicht mehr eingezeichnete Durchgangslöcher vorgesehen. Die Kühlkanäle (4, 5) verlaufen wellenförmig in etwa senkrecht zur Zeichnungsebene.

Die untere Deckplatte (2) hat ebene Flächen ohne Aussparungen. Zwischen Deckplatte (2) und Grundplatte (1) ist eine 0,1 mm dicke Lötfolie (6) aus Silber-Palladium-Lot gelegt, aus der mit den Durchgangslöchern (3) deckungsgleiche Löcher (6) ausgestanzt sind. Dabei ist jedem Durchgangsloch (3) ein aus der Lötfolie (6) ausgespartes Loch (7) zugeordnet.

Zwischen Lötfolie (6) und Grundplatte (1) sind in bestimmten Abständen Kupferdrähte (8) mit einer Dicke von 0,08 mm gelegt. Sie fungieren während des Lötvorgangs als Abstandhalter.

Die Kühlkanäle (4, 5) sind zudem mit einer Oxidschicht (10) versehen. Diese ist dadurch gebildet worden, daß die fertige Grundplatte (1) in einem Ofen unter Luft definiert aufgeheizt worden ist. Anschließend ist die Grundplatte (1) an ihrer der Lötfolie (6) benachbarten Seite vollständig blankgeschliffen worden, um die zu verlötenden Flächen von der Oxidschicht zu befreien.

Für den Lötvorgang wird die Anordnung gemäß Figur (1) einem Vakuumofen zugeführt und auf bzw. etwas über die Schmelztemperatur der Lötfolie (6) erhitzt. Dabei werden die Grundplatte (1) und die Deckplatte (2) gegeneinander gedrückt, symbolisiert durch die beiden Gewichte (11, 12). Durch das Schmelzen der Lötfolie (6) sinken die Kupferdrähte (8, 9) in diese ein, wirken dabei aber gleichzeitig als Abstandhalter, die ein weiteres Annähern der beiden Platten (1, 2) und damit ein Eindringen des Lotes (6) in die Kühlkanläle (4, 5) weitestgehend verhindern. Diese Situation ist in Figur (2) gezeigt. Eine eventuelle Benetzung der Flächen der Kühlkanäle (4, 5) durch Kapillarwirkung oder Kriechen wird durch die Oxidschicht (10) verhindert.

Nach dem Löten wird das in Figur (2) gezeigte Werkstück fertig bearbeitet. Hierzu werden die Durchgangslöcher (3) in der Grundplatte (1) und die Löcher (7) im Lot (6) wesentlich vergrößert und weiter durchgebohrt, so daß auch in der Deckplatte (2) Durchgangslöcher (13) entstehen. Dies geschieht mit allen Durchgangslöchern (3), so daß die in Figur (3) dargestellte fertige Gitterstruktur entsteht.

Die Oxidschicht (10) in den Kühlkanälen (4, 5) wird dadurch entfernt, daß die Kühlkanäle (4, 5) mit einer geeigneten Beize durchspült werden. Danach ist die Gitterstruktur beispielsweise im Gittersatz eines Beschleunigungsgitters für die Neutralteilcheninjektion geeignet. Die dabei erzeugten hochenergetischen Teilchen werden durch die Durchgangslöcher (3, 7, 13) fokussiert, wobei die Gitterstruktur mittels durch die Kühlkanäle (4, 5) gespülten Wassers gekühlt werden.

Sollte trotz aller Maßnahmen Lot (6) in die Kühlkanäle (4, 5) gelangt sein, besteht die Möglichkeit, dieses Lot (6) im Vakuumofen nach Erhitzen auf bzw. über Schmelztemperatur des Lotes (6) dadurch zu entfernen, daß die Kühlkanäle (4, 5) an eine Inertgasflasche angeschlossen und mit kurzen Druckstößen beaufschlagt werden. Auf diese Weise wird das dann flüssige Lot aus den Kühlkanälen (4, 5) herausgeblasen. Dies geschieht unter einer entsprechenden Gewichtsbelastung, um die Lötstellen nicht zu beeinträchtigen.

Sollten noch Lecks vorhanden sein, können diese durch Nachlöten mit einem gegenüber der Lötfolie (6) niedriger schmelzenden Lot beseitigt werden, ohne daß das schon verarbeitete Lot (6) wieder aufgeschmolzen werden muß.

## Patentansprüche

1. Verfahren zur Herstellung von thermisch hochbelasteten Kühlelementen, insbesondere von Beschleunigungsgittern für die Neutralteilcheninjektion in Fusionsreaktoren, bei dem in eine Grundplatte offene Kühlkanäle eingeformt, insbesondere eingefräst werden und eine Deckplatte aufgelegt wird, nachdem zwischen beiden schichtweise ein Lot angeordnet worden ist, und bei dem schließlich Grund- und Deckplatte, vorzugsweise unter Druckbelastung, und durch Erhitzen miteinander verlötet werden, dadurch gekennzeichnet, daß zwischen Grund- und Deckplatte (1, 2) Abstandhalter (8, 9) sowie eine Lötfolie (6) vorgesehen werden, und daß das anschließende Löten mit unten liegender Deckplatte (2) erfolgt, so daß die Abstandshalter (8, 9) den zwischen Grund- und Deckplatte (1, 2) nötigen Abstand beim Löten einhalten.

2. Verfahren nach Anspruch 1, dadurch gekennzeichnet, daß die Kühlelemente Durchgangslöcher (3) aufweisen und in der Lötfolie (6) spätestens vor dem Löten mit den Durchgangslöchern (3) deckungsgleiche Löcher (7) ausgespart werden.

3. Verfahren nach Anspruch 1 oder 2, dadurch gekennzeichnet, daß die Durchgangslöcher (3) vor dem Löten nur in die Grundplatte (1) und erst nach dem Löten in die Deckplatte (2) gebohrt werden.

4. Verfahren nach einem der Ansprüche 2 bis 3, dadurch gekennzeichnet, daß die Löcher (7) in der Lötfolie (6) vor dem Auflegen auf einer der Platten (1 oder 2) ausgespart werden.

5. Verfahren nach einem der Ansprüche 1 bis 4, dadurch gekennzeichnet, daß als Abstandhalter Drähte (8, 9) Plättchen, Noppen, Ringe oder dergleichen verwendet werden.

6. Verfahren nach einem der Ansprüche 1 bis 5, dadurch gekennzeichet, daß die Abstandhalter (8, 9) aus dem Material der Grund- und Deckplatte (1, 2) bestehen.

7. Verfahren nach einem der Ansprüche 1 bis 6, dadurch gekennzeichnet, daß die Abstandhalter (8, 9) eine Dicke von ca. 0,08 mm haben.

8. Verfahren nach einem der Ansprüche 1 bis 7, dadurch gekennzeichnet, daß die Lötfolie (6) eine Dicke von ca. 0,1 mm hat.

9. Verfahren nach einem der Ansprüche 1 bis 8, dadurch gekennzeichnet, daß zumindest die in die Grundplatte (1) eingeformten Wandungen der Kühlkanäle (4, 5) vor dem Verlöten mit einer die Benetzung durch das Lot (6) behindernden Beschichtung (10) versehen werden.

10. Verfahren nach Anspruch 9, dadurch gekennzeichnet, daß die Beschichtung (10) nach dem Löten durch Beizen oder dergleichen entfernt wird.

11. Verfahren nach Anspruch 9 oder 10, dadurch gekennzeichnet, daß die Grundplatte (1) vor dem Auflegen der Lötfolie (6) und der Deckplatte (2) unter Lufteinwirkung zur Bildung einer Oxidschicht (10) aufgeheizt und die Oxidschicht (10) anschließend von den zu verlötenden Flächen entfernt wird.

12. Verfahren nach einem der Ansprüche 1 bis 11, dadurch gekennzeichnet, daß das Kühlelemet nach dem Löten nochmals auf bzw. über Löttemperatur erhitzt und eventuell in den Kühlkanälen (4, 5) befindliches Lot (6) herausgeblasen wird.

13. Verfahren nach Anspruch 12, dadurch gekennzeichnet, daß zum Herausblasen des Lotes (6) ein Inertgas stoßweise durchgeblasen wird.

14. Verfahren nach einem der Ansprüche 1 bis 13, dadurch gekennzeichnet, daß die Lötung im Hochvakuum stattfindet.

15. Verfahren nach einem der Ansprüche 1 bis 14, dadurch gekennzeichnet, daß für die Lötfolie (6) ein Silber-Palladium-Lot verwendet wird.

16. Verfahren nach einem der Ansprüche 1 bis 15, dadurch gekennzeichnet, daß zur Reparatur eventueller Lecks ein Lot verwendet wird, dessen Schmelztemperatur niedriger als das der Lötfolie (6) liegt.

## Revendications

1. Procédé de fabrication d'éléments de réfrigération très chargés thermiquement, notamment de grilles d'accélération pour l'injection de particules neutres dans des réacteurs de fusion, dans lequel on forme des canaux de refroidissement ouverts dans une plaque de base, notamment en les fraisant et on y applique une plaque de couverture, après avoir ménagé, entre les deux, une soudure à la manière d'une couche, et dans lequel on soude enfin entre elles la plaque de base et la plaque de couverture, de préférence en appliquant une pression par chauffage, caractérisé en ce qu'il consiste à prévoir, entre la plaque de base (1) et la plaque de couverture (2), des entretoises (8, 9), ainsi qu'une feuille de soudure (6) et à effectuer ensuite la soudure, alors que la plaque de couverture (2) se trouve en bas, de telle façon que les entretoises (8, 9) maintiennent la distance nécessaire entre la plaque de base (1) et la plaque de couverture (2) lors de la soudure.

2. Procédé suivant la revendication 1, caractérisé en ce que les éléments de réfrigération comportent des trous traversant (3) et des trous (7) en coïncidence avec les trous de passage (3) sont ménagés dans la feuille de soudure (6), au plus tard avant le soudage.

3. Procédé suivant la revendication 1 ou 2, caractérisé en ce que les trous traversant (3) sont percés avant le soudage seulement dans la plaque de base (1) et ne le sont qu'après le soudage dans la plaque de couverture (2).

4. Procédé suivant l'une des revendications 2 à 3, caractérisé en ce que les trous (7) sont ménagés dans la feuille de soudure (6) avant l'application sur l'une des plaques (1 ou 2).

5. Procédé suivant l'une des revendications 1 à 4, caractérisé en ce qu'il consiste à utiliser comme entretoises des fils métalliques (8, 9), des plaquettes, des boutons, des anneaux ou des éléments analogues.

6. Procédé suivant l'une des revendications 1 à 5, caractérisé en ce que les entretoises (8, 9) sont constituées en le matériau de la plaque de base (1) et de la plaque de couverture (2).

7. Procédé suivant l'une des revendications 1 à 6, caractérisé en ce que les entretoises (8, 9) ont une épaisseur de 0,08 mm environ.

8. Procédé suivant l'une des revendications 1 à 7, caractérisé en ce que la feuille de soudure (6) a une épaisseur de 0,1 mm environ.

9. Procédé suivant l'une des revendications 1 à 8, caractérisé en ce qu'au moins les parois des canaux de réfrigération (4, 5) formées dans la plaque de base (1) sont munies, avant le soudage, d'un revêtement (10) empêchant le mouillage par la soudure (6).

10. Procédé suivant la revendication 9, caractérisé en ce qu'il consiste à enlever le revêtement (10) par décapage ou par un procédé analogue après le soudage.

11. Procédé suivant la revendication 9 ou 10, caractérisé en ce qu'il consiste à chauffer la plaque de base (1) avant l'application de la feuille de soudage (6) et de la plaque de couverture (2) avec action de l'air, pour former une couche d'oxyde (10), et ensuite à éliminer la couche d'oxyde (10) des surfaces à souder.

12. Procédé suivant l'une des revendications 1 à 11, caractérisé en ce qu'il consiste à chauffer, encore une fois, l'élément de réfrigération après le soudage, à la température de soudage ou au-dessus de cette température et, éventuellement, à éliminer par soufflage la soudure se trouvant dans les canaux de réfrigération (4, 5).

13. Procédé suivant la revendication 12, caractérisé en ce qu'il consiste, pour éliminer la soudure (6), à insuffler par à-coups un gaz inerte.

14. Procédé suivant l'une des revendications 1 à 13, caractérisé en ce qu'il consiste à effectuer le soudage sous vide poussé.

15. Procédé suivant l'une des revendications 1 à 14, caractérisé en ce qu'il consiste à utiliser, pour la feuille de soudure (6), une soudure à l'argent et au palladium.

16. Procédé suivant l'une des revendications 1 à 15, caractérisé en ce qu'il consiste à utiliser, pour la réparation d'une fuite éventuelle, une soudure dont le point de fusion est inférieur à celui de la feuille de soudure (6).

## Claims

1. Method for the production of thermally highly stressed cooling elements, in particular of acceleration grids for the injection of neutral particles into fusion reactors, in which open cooling channels are formed, in particular milled, in a base plate and a cover plate is superimposed after a solder has been disposed between the two layerwise, and in which the base plate and cover plate are finally brazed to one another by heating, preferably under pressure loading, characterized in that spacers (8, 9) and also a brazing foil (6) are provided between base plate and cover plate (1,2), and in that the subsequent brazing takes place with the cover plate (2) situated underneath, so that the spacers (8, 9) maintain the necessary spacing between base plate and cover plate (1, 2) during brazing.

2. Method according to Claim 1, characterized in that the cooling elements have passage holes (3) and holes (7) coincident with the passage holes (3) are cut out in the brazing foil (6) no later than before brazing.

3. Method according to Claim 1 or 2, characterized in that the passage holes (3) are drilled only in the base plate plate (1) before brazing and are drilled in the cover plate (2) only after brazing.

4. Method according to one of Claims 2 to 3, characterized in that the holes (7) in the brazing foil (6) are cut out before superimposition on one of the plates (1 or 2).

5. Method according to one of Claims 1 to 4, characterized in that wires (8, 9), platelets, knobs, rings or the like are used as spacers.

6. Method according to one of Claims 1 to 5, characterized in that the spacers (8, 9) are composed of the material of the base plate and cover plate (1, 2).

7. Method according to one of Claims 1 to 6, characterized in that the spacers (8, 9) have a thickness of approx. 0.08 mm.

8. Method according to one of Claims 1 to 7, characterized in that the brazing foil (6) has a thickness of approx. 0.1 mm.

9. Method according to one of Claims 1 to 8, characterized in that at least the walls of the cooling channels (4, 5) formed in the base plate (1) are provided, before brazing, with a coating (10) which impedes wetting by the solder (6).

10. Method according to Claim 9, characterized in that the coating (10) is removed by pickling or the like after brazing.

11. Method according to Claim 9 or 10, characterized in that the base plate (1) is heated up with exposure to air to form an oxide layer (10) before the superimposition of the brazing foil (6) and cover plate (2) and the oxide layer (10) is subsequently removed from the surfaces to be brazed.

12. Method according to one of Claims 1 to 11, characterized in that the cooling element is again heated to or above brazing temperature after brazing and any solder (6) situated in the cooling channels (4, 5) is blown out.

13. Method according to Claim 12, characterized in that an inert gas is intermittently blown through to blow out the solder (6).

14. Method according to one of Claims 1 to 13, characterized in that the brazing takes place in high vacuum.

15. Method according to one of Claims 1 to 14, characterized in that a silver-palladium solder is used for the brazing foil (6).

16. Method according to one of Claims 1 to 15, characterized in that, to repair any leaks, a solder is used whose melting point is lower than that of the brazing foil (6).

Fig.1

Fig.2

Fig.3